# EUROPEAN PATENT SPECIFICATION

(11) **EP 2 464 888 B1**
(45) Date of publication and mention of the grant of the patent: **01.04.2015**
(21) Application number: 10763421.4
(22) Date of filing: 13.08.2010
(51) Int. Cl.: F16D 65/78, F16D 65/853, F16D 65/14

(54) **OIL COOLED BRAKE**
ÖLGEKÜHLTE BREMSE
FREIN REFROIDI PAR HUILE

(30) Priority: 14.08.2009 GB 0914235
(43) Date of publication of application: 20.06.2012
(73) Proprietor: Valtra Oy Ab, 44200 Suolahti (FI)
(72) Inventor: RINTOO, Mikko, Juhani, FIN-41310 Leppavesi (FI)
(74) Representative: Marden, David Ian
(86) International application number: PCT/IB2010/002005
(87) International publication number: WO 2011/018701

(56) References cited:
- WO-A1-2008/006709
- WO-A1-2010/046344
- DE-A1-102005 016 493
- US-A1- 2004 099 489
- US-A1- 2005 158 170

## Description

This invention relates to oil cooled vehicle brakes and in particular to multi-plate disc brakes which have brake discs which rotate in cooling oil.

Such brake discs are driven by a shaft which forms part of the vehicle driveline and is connected with the vehicle wheels. Problems arise with such brakes in that considerable power can be lost and heat generated when the brake discs are rotated in the cooling oil.

WO-2008/006709 discloses a multiple disc brake in an automatic transmission wherein means are provided to control the flow of oil over or through a disk set in response to different operating conditions.

It is an object of the present invention to provide an improved form of vehicle oil cooled brake which at least mitigates the above problem.

Thus according to the present invention there is provided a vehicle oil-cooled brake apparatus comprising a brake housing, one or more rotatable brake discs in the brake housing and connected with a driveline shaft, brake applying means to bring the brake disc or discs into frictional contact with a non rotatable structure to brake the shaft, an inlet into the brake housing through which cooling oil may enter the brake housing and, an outlet for allowing cooling oil to leave the brake housing. The invention is characterised in that the brake apparatus further comprises a transmission housing adjacent the brake housing and separated by a wall, the inlet being provided in the wall, a closure member for closing off the inlet, the closure member being moveable between an inlet open and an inlet closed position by an actuator means, and, control means for activating the actuator means to move the closure member to close the inlet when the associated vehicle achieves one or more vehicle predetermined operating conditions, wherein oil can flow freely between the brake housing and transmission housing when the inlet is open and wherein the rotating brake disc or discs or a component rotating therewith can pump oil from the brake housing, via the outlet, when the inlet is closed.

The invention is particularly applicable to brakes which have a plurality of rotating brake discs.

The control means preferably closes the inlet when the vehicle has been driven at a predetermined vehicle speed for a predetermined time period (e.g. 10km/hr for 15 seconds).

The inlet is preferably opened when the brake is applied. The actuator means may comprise spring means for opening the closure member and a hydraulic piston for closing the closure member. Alternatively the actuator can be a solenoid or an electric motor.

The closure member may pivots, rotate or slide between its open and closed positions.

In one particular arrangement, an electric motor is provided which drives gears which mesh with teeth formed on an outer periphery of the rotating closure member to rotate the member between its open and closed positions.

The disc or discs may be provided with grooves and/or slots in the portion of the disc or discs submerged in the oil, these grooves and/or slots assisting in the circulation of oil within the brake and in the pumping of the oil out of the chamber when the closure member is in the closed position.

Alternatively, an impellor may rotate with the brake disc or discs for pumping the oil from the chamber when the closure member is in the closed position.

The impellor may comprise a disc with impellor vanes around it inner periphery the disc being rotatable by the driveline shaft, and the outlet means is aligned with the impellor blades to receive oil pumped by the blades.

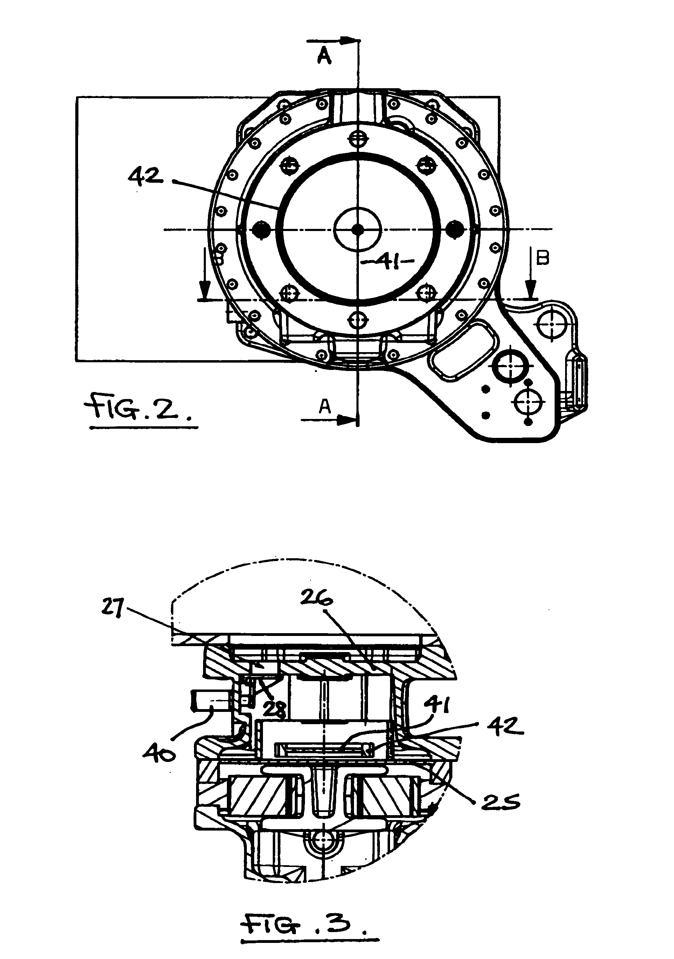

The present invention will now be described, by way of example only, with reference to the accompanying drawings in which:-
- Figure 1: shows a vertical section on the line A-A of Figure 2 through part of a tractor rear axle which includes an oil cooled brake in accordance with the present invention;
- Figure 2: is a vertical section through the back axle shown in Figure 1;
- Figure 3: is a horizontal section on the line B-B of Figure 2;
- Figure 4: is a perspective view of part of the back axle shown in Figures 1 to 3 viewed in the direction of arrow X of Figure 1;
- Figure 5: is a perspective horizontal section through the rear axle of Figure 1;
- Figure 6: shows diagrammatically operation of an oil passage closure member;
- Figures 7 and 8: show perspective and end views of an alternative brake in accordance with the present invention, and
- Figures 9 and 10: show details of rotatable brake discs suitable for use in a brake in accordance with the present invention.

Referring to the drawings, a tractor back axle 10 comprises a central transmission housing 11 to which a brake housing 12, a planetary reduction gear housing 13 and an outer axle trumpet housing 14 are secured in series.

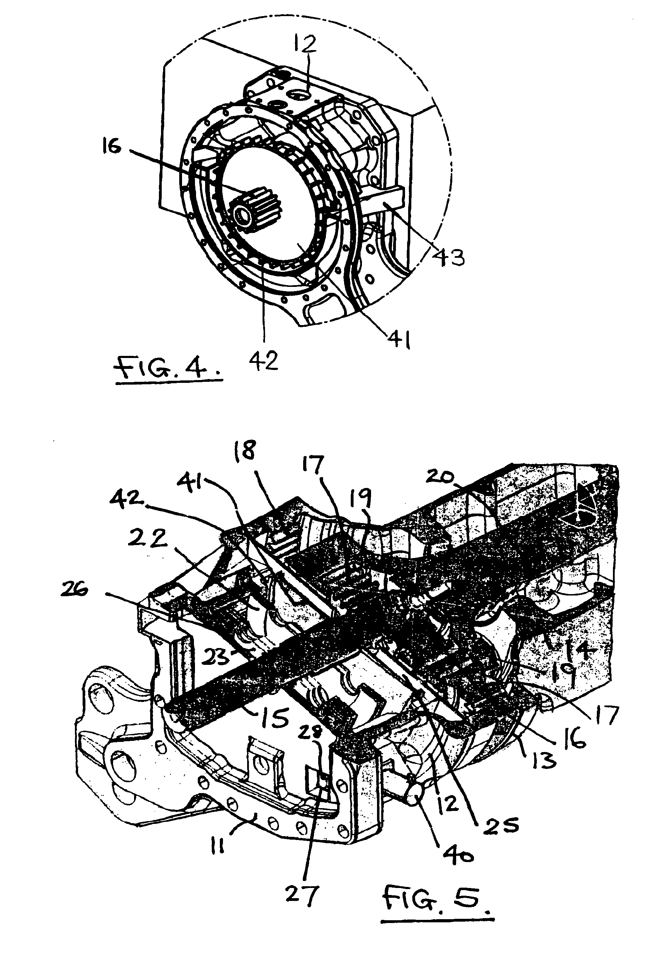

As best shown in Figure 5, drive from the central differential (not shown) and other gearing within transmission housing 11 is transmitted to a shaft 15 which passes through brake housing 12 and into planetary reduction gear housing 13. Within reduction housing 13 a sun gear 16 formed on the end shaft 15 meshes with planet gears 17 which in turn mesh with an annular gear 18 supported inside housing 13. Planet gears 17 are carried on a planet carrier 19 which is splined on to an output shaft 20 which terminates in a wheel hub 21 to which the associated wheel (not shown) of the tractor is secured by conventional mounting bolts etc.

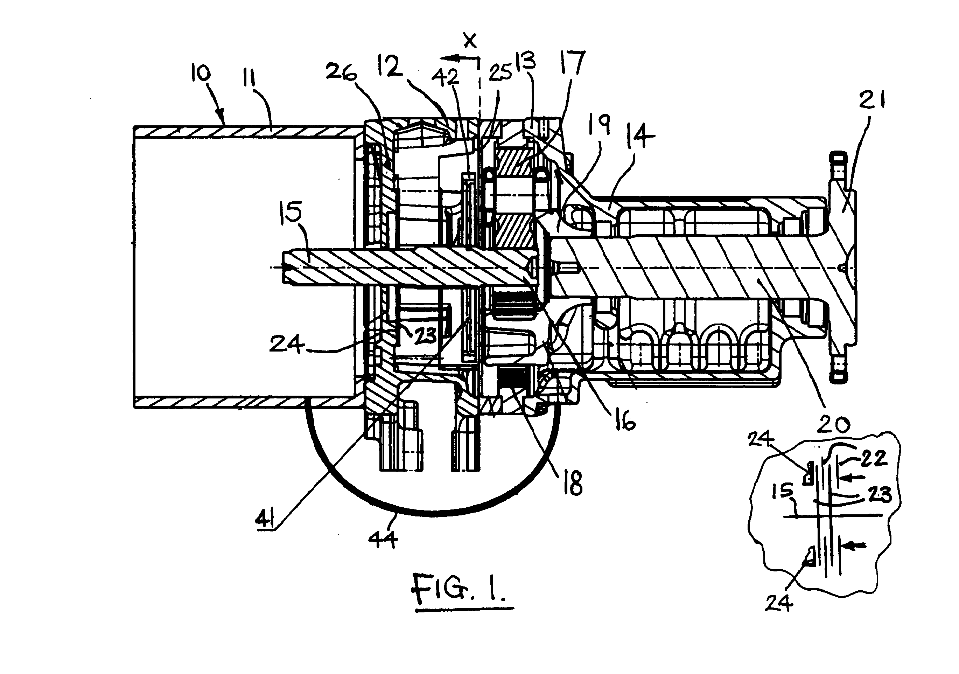

In accordance with the present invention, brake housing 12 houses a plurality of annular brake discs 22 which are splined at their outer periphery on to housing 12. Interleaved between the annular brake discs 22 are circular brake discs 23 which are splined at their inner peripheries on to shaft 15. As is customary, the interleaved brake discs 22 and 23 can be displaced to the left as shown in Figures 1 and 5 into contact with abutment surface 24 of housing 12 by a hydraulically moveable piston (not shown) in order to brake the rotation of shaft 15 and hence the associated wheel hub 21.

The planetary reduction gear housing 13 and the brake housing 12 are separated from each other by a wall 25 and similarly the brake housing 12 is separated from the central transmission housing 11 by a wall 26.

Normally brake housing 12 is least partially filled with oil in order to cool the brake discs 22, 23. Brake housing 12 is also connected with central transmission housing 11 via an inlet aperture 27 which allows oil to flow freely from central transmission housing 11 into brake housing 12.

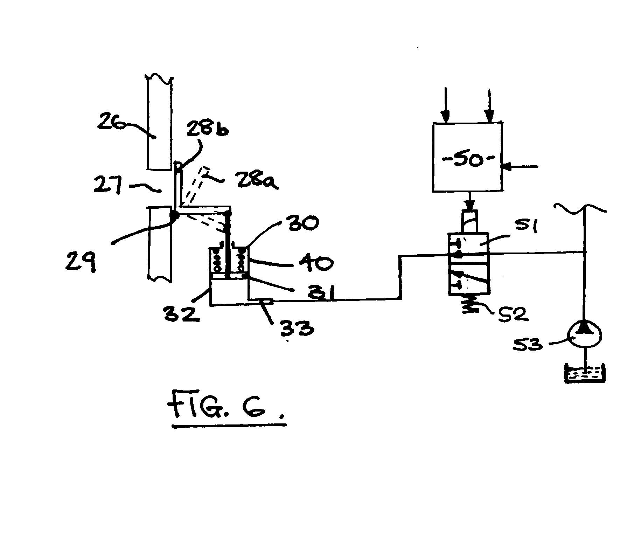

Inlet passage 27 is provided with a closure member 28 which is pivoted at 29 on the housing 12 and is biased to the open position 28a (shown in dotted detail in Figure 6) by a spring 30 which forms part of an actuator 40. The actuator is also provided with a hydraulically operated piston 31 which slides in a cylinder 32 and which can be pressurised by admitting hydraulic pressure to cylinder 32 via an inlet 33.

Conveniently the inlet 33 of actuator 40 can be connected with the hydraulic system of the tractor so that when the brake is applied the chamber of cylinder 32 is pressurised and the closure member 28 is moved to its closed position 28b. Also splined onto shaft 15 is an impellor disc 41 which carries impellor vanes 42 around its outer periphery. The diameter of impellor disc 41 is greater than that of the brake discs 22,23 so that the impellor blades dip deep into the oil contained with in the brake housing 12 and move the oil radially outwardly into return passages 43 via which the oil is returned into the central transmission housing 11. Housings 11 and 14 may be connected for oil flow by a hose 44.

Thus during a normal operation of the vehicle the inlet 27 is open under the action of spring 30 and there is a continuous flow of oil from the central transmission housing 11 into the brake housing 12 and hence, under the action of impellor blades 42, back via passages 43 into the central transmission housing 11. Thus the brake discs 22, 23 are cooled so that efficient braking is maintained.

Other forms of closure member may be used and the closure member can, for example, be solenoid operated in both direction or in one direction and then in the other direction by a spring.

In accordance with the present invention a control device 50 is provided which receives input signals indicating the speed of the vehicle over the ground and the time period for which these vehicles speeds have been maintained. If, for example, the vehicle is travelling at a speed of 10kph for time periods of 15 seconds or above the control unit issues an output signal to a solenoid operated valve 51 to open the valve against a spring bias 52 to allow pressurised fluid from a pump 53 to pressurise the cylinder 32 of closure member piston 31 so that closure member 28 is moved to its closed position 28b. The flow of oil into brake housing 12 from central transmission housing 11 is thus cut off and the impellor blades 42 continue to drive the fluid out of oil containing brake housing 12 hack into the central transmission housing 11 so that the general level of oil within the housing 11 drops rapidly to a level below that of which the rotating brake discs 23 are immersed in the oil. This significantly reduces the power losses due to churning of the oil by the brake discs 23 and also the amount of heat generated.

If the brake is applied, the control device 50 deactivates valve 51 which closes under the action on spring bias 52 to lower the pressure in cylinder 32 which again opens the closure member 28 under the action of spring 30 so that the flow of oil from the central transmission housing 11 into the brake housing 12 is resumed and brake is fully cooled during braking operation.

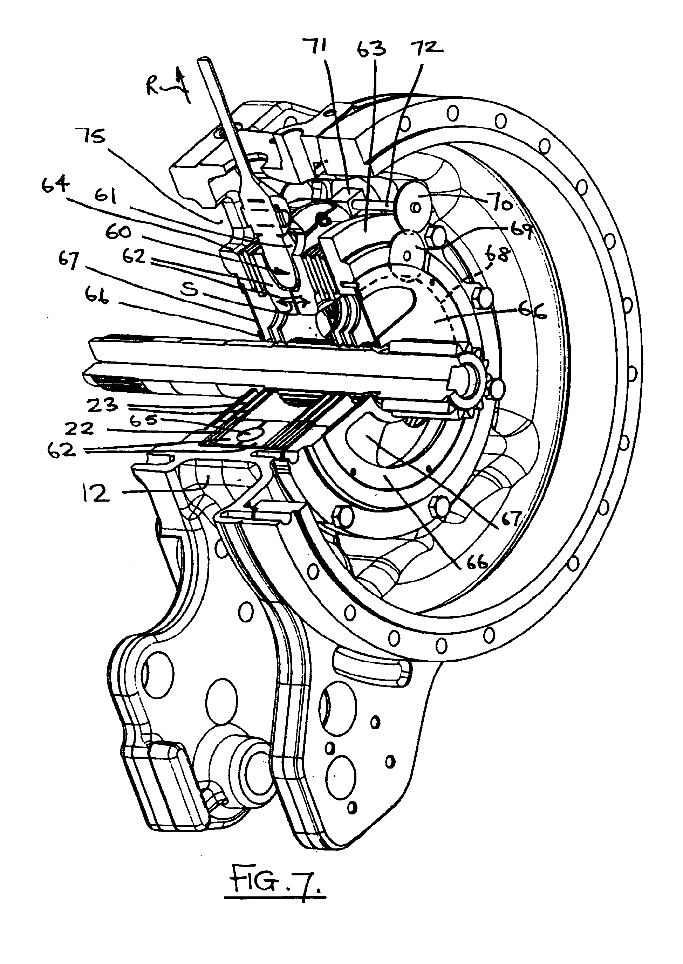

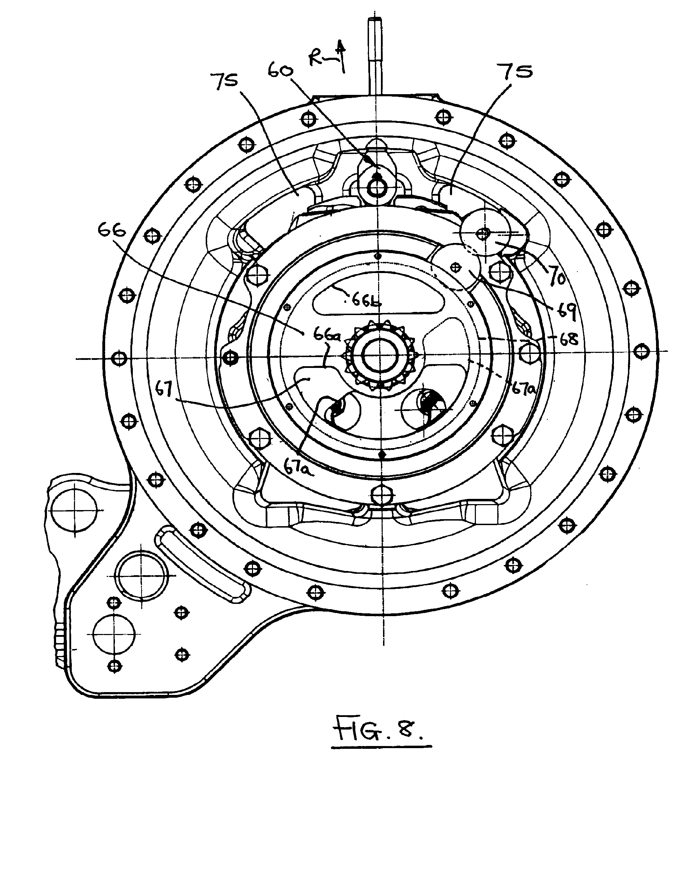

Figures 7 and 8 show an alternative form of the present invention in which a central wedge type actuator 60 has a wedge member 61 which, when pulled radially outwardly in the direction of arrow R, causes annular pressure plates 62 to rotate circumferentially relative to each other and thus move apart, as indicated by arrows S, using a ball and ramp expander mechanism 65 as is well known in the art. The movement S forces the brake discs 22. 23 outwardly against the outer walls 63 and 64 of the brake housing 12 to apply the brake.

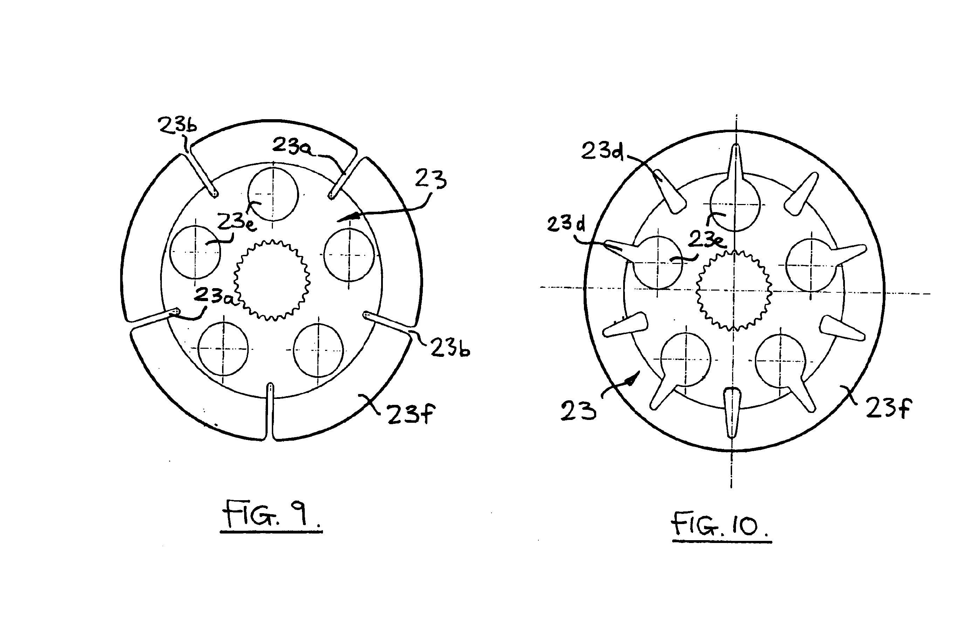

Rotating discs 23 are provided with radially extending slots 23a which open through the outer periphery of the discs at 23b (see Figure 9). These slots increase the ability of the rotating discs 23 to pump cooling oil which is within the brake housing radially outwardly when the brake is not applied and through upper openings 75 into the adjacent transmission housing 11.

An alternative form of slotted brake disc is shown in Figure 10 in which radially extending slot-like formations 23d, half of which communicate with the circular holes 23e in the discs provided to improve circulation on oil within the stack of brake discs, again help to increase the ability of the brake discs to pump any oil in the brake housing radially outwardly.

The brake discs 22, 23 may also be provided with shallow grooves (not shown) in their braking surfaces 23f which improve cooling and again help the pumping action of the discs when the brake is not operating.

The ends of the brake housing are closed off by two pairs of sheet metal plates 66 and 67. The outer plate 66 of each pair is fixed to the adjacent wall 63 or 64 and the inner plate 67 can be rotated relative to the outer plate to act as a closure member to isolate the volume between the pairs of plates 66 and 67 from the adjacent transmission housing. Each outer plate 66 and inner plate 67 is provided with a lower substantially arcuate opening 66a and 67a respectively. Similarly, each plate 66 is provided with an upper opening 66b.

The inner plates 67 arc provided with teeth 68 (indicated in dotted detail) which are driven by gears 69 and 70 which are rotated by shafts 72 extending from both ends of an electric motor 71. Thus actuation of motor 71 by control device 50 can rotate the inner plates 67 to open or close the openings 66a and 66b in the outer plates 66. The upper openings 66b are open when the inner plates 67 have been rotated through 180degrees when the openings 67a in the inner plates are then aligned with the upper openings 66b in the outer plates 66 and the lower openings 66a are fully closed. Figures 7 and 8 show the openings 66a partially open.

In accordance with the present invention, these openings are open when the brake is in use to expose the brake discs to the cooling oil from the adjacent transmission housing and the openings are closed by the control device 50 when, for example, the vehicle has been travelling at a speed of 10kph for time periods of 15 seconds or above. When the openings are closed the oil is pumped out of the volume between the two pairs of plates 66, 67 and back into the transmission housing 11 via openings 75 by the rotating discs 23 which may include the slots 23a or the formations 23d to increase their pumping action. The pumping action of the rotating discs 23 replaces the impellor 41 in this embodiment.

## Claims

1. A vehicle oil-cooled brake apparatus comprising:-
- a brake housing (12);
- one or more rotatable brake discs (22,23) in the brake housing (12) and connected with a driveline shaft (15);
- brake applying means to bring the brake disc or discs into frictional contact with a non rotatable structure to brake the shaft (15);
- an inlet (27) into the brake housing (12) through which cooling oil may enter the brake housing (12); and,
- an outlet (43;75) for allowing cooling oil to leave the brake housing (12),
**characterised in that** the brake apparatus further comprises:
- a transmission housing (11) adjacent the brake housing (12) and separated by a wall (26), the inlet (27) being provided in the wall (26);
- a closure member for closing off the inlet (27), the closure member being moveable between an inlet open and an inlet closed position by an actuator means; and,
- control means for activating the actuator means to move the closure member to close the inlet when the associated vehicle achieves one or more vehicle predetermined operating conditions;
wherein oil can flow freely between the brake housing and transmission housing when the inlet is open and wherein the rotating brake disc or discs or a component rotating therewith can pump oil from the brake housing, via the outlet, when the inlet is closed.

2. Brake apparatus according to claim 1 having a plurality of brake discs rotating in the brake housing (12).

3. Brake apparatus according to claim 1 or 2 in which the control means closes the inlet when the vehicle has been driven at a predetermined vehicle speed for a predetermined time period.

4. Brake apparatus according to claim 3 in which the inlet (27) is opened when the brake is applied.

5. Brake apparatus according to any one of claims 1 to 4 in which the closure member (28) pivots between its open and closed positions.

6. Brake apparatus according to any one of claims 1 to 5 in which the closure member (28) rotates between its open and closed positions.

7. Brake apparatus according to any one of claims 1 to 6 in which the actuator (40) means comprises spring means (30) for opening the closure member and a hydraulic piston (31) for closing the closure member.

8. Brake apparatus according to any one of claims 1 to 6 in which the actuator means comprises a solenoid or an electric motor (71).

9. Brake apparatus according to claims 6 and 8 in which an electric motor drives gears (69, 70) which mesh with teeth formed on an outer periphery of the rotating closure member to rotate the member between its open and closed positions.

10. Brake apparatus according to any one of claims 1 to 9 in which the brake disc or discs are provided with grooves and/or slots (23a) in the portion of the disc or discs submerged in the oil, these grooves and/or slots assisting in the circulation of oil within the brake and in the pumping of the oil out of the chamber when the closure member is in the closed position.

11. Brake apparatus according to anyone of claims 1 to 9 in which an impellor rotates with the disc or discs for pumping the oil from the chamber when the closure member is in the closed position.

12. Brake apparatus according to claim 11 in which the impellor comprises a disc with impellor vanes (42) around it inner periphery the disc being rotatable by the driveline shaft, and the outlet means is aligned with the impellor blades to receive oil pumped by the blades.

## Patentansprüche

1. Ölgekühlte Bremseinrichtung für ein Fahrzeug mit
- einem Bremsgehäuse (12);
- mindestens einer verdrehbaren Bremsscheibe (22, 23), welche in dem Bremsgehäuse (12) angeordnet ist und mit einer Antriebsstrang-Welle (15) verbunden ist;
- mindestens einem Bremsbetätigungsorgan zur Herbeiführung eines Reibkontakts der mindestens einen Bremsscheibe mit einer nicht rotierenden Struktur zur Abbremsung der Welle (15);
- einem Einlass (27) in das Bremsgehäuse (12), durch welchen kühlendes Öl in das Bremsgehäuse (12) eintreten kann; und
- einem Auslass (43; 75) zur Ermöglichung eines Austritts kühlenden Öls aus dem Bremsgehäuse (12),
**dadurch gekennzeichnet, dass** die Bremseinrichtung des Weiteren aufweist:
- ein Getriebe- oder Übertragungsgehäuse (11) benachbart dem Bremsgehäuse (12) und hiervon getrennt durch eine Wandung (26), wobei der Einlass (27) in der Wandung (26) vorgesehen ist;
- ein Schließelement zum Verschließen des Einlasses (27), wobei das Schließelement durch ein Aktuator-Mittel zwischen einer Position mit offenem Einlass und mit geschlossenem Einlass bewegbar ist; und
- mindestens ein Steuer- oder Regelorgan zur Aktivierung des Aktuator-Mittels zum Bewegen des Schließelements zum Verschließen des Einlasses, wenn das zugeordnete Fahrzeug in einen oder mehrere vorbestimmte Betriebszustände des Fahrzeugs gelangt;
wobei Öl frei zwischen dem Bremsgehäuse und dem Übertragungs- oder Getriebegehäuse fließen kann, wenn der Einlass offen ist, und wobei die mindestens eine rotierende Bremsschreibe oder eine Komponente, die hiermit rotiert, Öl von dem Bremsgehäuse über den Auslass pumpen kann, wenn der Einlass geschlossen ist.

2. Bremseinrichtung nach Anspruch 1 mit mehreren Bremsscheiben, die in dem Bremsgehäuse (12) rotieren.

3. Bremseinrichtung nach Anspruch 1 oder 2, wobei das Steuer- oder Regelungsorgan den Einlass schließt, wenn das Fahrzeug für eine vorbestimmte Zeitspanne mit einer vorbestimmten Fahrzeuggeschwindigkeit gefahren worden ist.

4. Bremseinrichtung nach Anspruch 3, wobei der Einlass (27) geöffnet ist oder wird, wenn die Bremse betätigt wird.

5. Bremseinrichtung nach einem der Ansprüche 1 bis 4, wobei das Schließelement (28) zwischen seiner offenen und geschlossenen Position verschwenkt.

6. Bremseinrichtung nach einem der Ansprüche 1 bis 5, wobei das Schließelement (28) zwischen seiner offenen und geschlossenen Position eine Drehbewegung durchführt.

7. Bremseinrichtung nach einem der Ansprüche 1 bis 6, wobei das Aktuator-Mittel (40) ein Federorgan (30) zum Öffnen des Schließelements und einen hydraulischen Kolben (31) zum Schließen des Schließelements aufweist.

8. Bremseinrichtung nach einem der Ansprüche 1 bis 6, wobei das Aktuator-Mittel einen Elektromagneten oder einen elektrischen Motor (71) aufweist.

9. Bremseinrichtung nach Anspruch 6 und 8, wobei ein elektrischer Motor Getrieberäder (69, 70) antreibt, welche mit Zähnen kämmen, die an dem äußeren Umfang des rotierenden Schließelements ausgebildet sind, um das Schließelement zwischen seiner offenen und geschlossenen Position zu verdrehen.

10. Bremseinrichtung nach einem der Ansprüche 1 bis 9, wobei die Bremsscheibe oder Bremsscheiben mit Nuten, Rillen und/oder Schlitzen (23a) in dem Bereich der Bremsscheibe oder Bremsscheiben ausgestattet ist/sind, welcher in das Öl eintaucht, wobei die Nuten, Rillen und/oder Schlitze die Zirkulation des Öls in der Bremse und das Pumpen von Öl aus der Kammer, wenn sich das Schließelement in der geschlossenen Position befindet, unterstützen.

11. Bremseinrichtung nach einem der Ansprüche 1 bis 9, wobei mit der mindestens einen Bremsscheibe ein Pumpen-, Flügel- oder Schaufelrad rotiert zum Pumpen des Öls von der Kammer, wenn sich das Schließelement in der geschlossenen Position befindet.

12. Bremseinrichtung nach Anspruch 11, wobei das Pumpen-, Schaufel- oder Flügelrad eine Scheibe aufweist mit Flügeln oder Schaufeln (42) um den inneren Umfang der Scheibe, wobei die Scheibe durch die Antriebsstrang-Welle verdrehbar ist und wobei das Auslassorgan mit den Schaufeln oder Flügeln ausgerichtet ist zum Empfangen von Öl, welches durch die Schaufeln oder Flügel gepumpt wird.

## Revendications

1. Dispositif formant frein refroidi à l'huile pour véhicule comprenant :
un boîtier de frein (12) ;
un ou plusieurs disques de frein pouvant tourner (22, 23) dans le boîtier de frein (12) et reliés à un arbre de transmission (15) ;
un moyen d'application de frein destiné à amener le disque ou les disques de frein en contact de frottement avec une structure ne pouvant tourner de manière à freiner l'arbre (15) ;
une entrée (27) sur le boîtier de frein (12) par laquelle de l'huile de refroidissement peut pénétrer dans le boîtier de frein (12) ; et
une sortie (43 ; 75) destinée à permettre à l'huile de refroidissement de sortir du boîtier de frein (12),
**caractérisé en ce que** le dispositif formant frein comprend, en outre :
un boîtier de transmission (11) adjacent au boîtier de frein (12) et séparé par une paroi (26), l'entrée (27) étant formée sur la paroi (26) ;
un élément d'obturation destiné à obturer l'entrée (27), l'élément d'obturation pouvant être déplacé entre une position d'entrée ouverte et une position d'entrée fermée à l'aide d'un moyen d'activation ; et
un moyen de commande destiné à activer le moyen d'activation afin de déplacer l'élément d'obturation de manière à fermer l'entrée lorsque le véhicule associé satisfait une ou plusieurs conditions opérationnelles de véhicule prédéterminées ;
dans lequel de l'huile peut circuler librement entre le boîtier de frein et le boîtier de transmission lorsque l'entrée est ouverte et dans lequel le disque ou les disques de frein tournants ou un composant tournant avec ceux-ci peut pomper l'huile à partir du boîtier de frein, par l'intermédiaire de la sortie, lorsque l'entrée est fermée.

2. Dispositif formant frein selon la revendication 1, comportant une pluralité de disques de frein tournant dans le boîtier de frein (12).

3. Dispositif formant frein selon la revendication 1 ou 2 dans lequel le moyen de commande ferme l'entrée lorsque le véhicule a été entraîné à une vitesse de véhicule prédéterminée pendant une période prédéterminée.

4. Dispositif formant frein selon la revendication 3 dans lequel l'entrée (27) est ouverte lorsque le frein est appliqué.

5. Dispositif formant frein selon l'une quelconque des revendications 1 à 4 dans lequel l'élément d'obturation (28) pivote entre ses positions ouverte et fermée.

6. Dispositif formant frein selon l'une quelconque des revendications 1 à 5, dans lequel l'élément d'obturation (28) tourne entre ses positions ouverte et fermée.

7. Dispositif formant frein selon l'une quelconque des revendications 1 à 6, dans lequel le moyen formant actionneur (40) comprend un moyen à ressort (30) afin d'ouvrir l'élément d'obturation et un piston hydraulique (31) afin de fermer l'élément d'obturation.

8. Dispositif formant frein selon l'une quelconque des revendications 1 à 6, dans lequel le moyen formant actionneur comprend un solénoïde ou un moteur électrique (71).

9. Dispositif formant frein selon les revendications 6 et 8 dans lequel un moteur électrique entraîne des engrenages (69, 70) qui s'engrènent sur des dents formées sur une périphérie externe de l'élément d'obturation tournant afin de faire tourner l'élément entre ses positions ouverte et fermée.

10. Dispositif formant frein selon l'une quelconque des revendications 1 à 9, dans lequel le disque ou les disques de frein comportent des rainures et/ou fentes (23a) sur la partie du disque ou des disques immergée dans l'huile, ces rainures et/ou fentes facilitant la circulation d'huile à l'intérieur du frein et le pompage de l'huile hors de la chambre lorsque l'élément d'obturation est dans la position fermée.

11. Dispositif formant frein selon l'une quelconque des revendications 1 à 9, dans lequel un rotor tourne avec le disque ou les disques afin de pomper l'huile à partir de la chambre lorsque l'élément d'obturation est dans la position fermée.

12. Dispositif formant frein selon la revendication 11, dans laquelle le rotor comprend un disque avec des aubes de turbine (42) autour de sa périphérie interne, le disque pouvant être entraîné en rotation par l'arbre de transmission, et le moyen de sortie est aligné avec les aubes du rotor afin de à recevoir l'huile pompée par les lames.
